# EUROPÄISCHE PATENTSCHRIFT

(11) **EP 2 289 155 B1**
(45) Veröffentlichungstag und Bekanntmachung des Hinweises auf die Patenterteilung: **19.02.2020**
(21) Anmeldenummer: 09780532.9
(22) Anmeldetag: 14.07.2009
(51) Int. Cl.: H02K 55/04, H02K 11/01

(54) **LÄUFER MIT SUPRALEITENDER LÄUFERWICKLUNG UND DIE LÄUFERWICKLUNG UMGEBENDER EINHEITLICHER HÜLLE**
ROTOR HAVING A SUPERCONDUCTING ROTOR WINDING AND AN INTEGRAL SLEEVE SURROUNDING THE ROTOR WINDING
ROTOR COMPRENANT UN ENROULEMENT SUPRACONDUCTEUR ET GAINE MONOBLOC ENTOURANT L'ENROULEMENT DE ROTOR

(30) Priorität: 29.07.2008 DE 102008035275
(43) Veröffentlichungstag der Anmeldung: 02.03.2011
(73) Patentinhaber: Siemens Aktiengesellschaft, 80333 München (DE)
(72) Erfinder: GATTERMANN, Sven, 90513 Zirndorf (DE); FRANK, Michael, 91080 Uttenreuth (DE); VAN HASSELT, Peter, 91058 Erlangen (DE)
(86) Internationale Anmeldenummer: PCT/EP2009/058949
(87) Internationale Veröffentlichungsnummer: WO 2010/012583

(56) Entgegenhaltungen:
- US-A- 3 194 655
- US-A- 4 224 066
- US-A- 4 465 106
- US-A1- 2003 052 568

## Beschreibung

Die vorliegende Erfindung betrifft einen Läufer für eine elektrische Maschine, insbesondere eine Synchronmaschine,
- wobei der Läufer eine eine Läuferachse definierende Läuferwelle aufweist,
- wobei der Läufer einen Wicklungsträger aufweist, der drehfest auf der Läuferwelle angeordnet ist, so dass er die Läuferwelle, bezogen auf die Läuferachse, in einem Mittelabschnitt umgibt,
- wobei der Wicklungsträger eine supraleitende Läuferwicklung trägt,
- wobei der Läufer eine Hülle aufweist, die, bezogen auf die Läuferachse, den Wicklungsträger und die Läuferwicklung zumindest radial umschließt.

Die vorliegende Erfindung betrifft weiterhin eine elektrische Maschine, insbesondere eine Synchronmaschine,
- wobei die elektrische Maschine ein Maschinengehäuse aufweist,
- wobei im Maschinengehäuse ein derartiger Läufer drehbar gelagert ist,
- wobei im Maschinengehäuse drehfest ein Stator angeordnet ist, der, bezogen auf die Läuferachse, den Läufer radial umgibt,
- wobei der Stator eine Ständerwicklung trägt, die an eine Spannungsversorgung anschließbar ist.

Ein derartiger Läufer und eine derartige elektrische Maschine sind beispielsweise aus der DE 103 00 269 A1 bekannt.

Die Hülle ist - sowohl im Stand der Technik als auch bei der vorliegenden Erfindung erforderlich, um die supraleitende Läuferwicklung hinreichend kühlen zu können und sie thermisch gegenüber der Umgebung zu schirmen. Die Hülle muss eine hohe mechanische Festigkeit aufweisen, um die im Betrieb auftretenden mechanischen Belastungen aufnehmen zu können. Die Hülle muss weiterhin eine hohe elektrische Leitfähigkeit aufweisen, um unvermeidliche elektromagnetische Oberwellen zu absorbieren.

Bei der DE 103 00 269 A1 ist die Hülle zweischichtig ausgebildet. Sie besteht - zumindest in dem Bereich, in dem sie den Wicklungsträger und die supraleitende Läuferwicklung radial umschließt - aus einer radial inneren Schicht aus Stahl und einer radial äußeren Schicht aus Kupfer.

Die konstruktive Ausgestaltung des Läufers ist bei der DE 103 00 269 A1 aufwändig. Entweder müssen ein Stahlrohr und ein Kupferrohr mit hoher Passgenauigkeit gefertigt werden oder es werden zwei Platten aus Kupfer und Stahl miteinander verbunden und hinterher zu einem Rohr gebogen, wobei die Stoßkante geschweißt wird. Beide Vorgehensweisen sind aufwändig und kostenintensiv. Weiterhin stellt die Schweißnaht eine Schwachstelle der Konstruktion dar.

Aus der US 4,465,106 A ist ebenfalls ein Läufer für eine elektrische Maschine bekannt, bei welcher der Wicklungsträger von einer mehrschichtigen Hülle umgeben ist. Die mehrschichtige Hülle weist eine mittlere Schicht auf, die aus einer Kupfer-Chrom- oder einer Kupfer-Zirkonium-Legierung besteht. Sie ist radial beidseitig von eisenhaltigen Schichten umgeben.

Des Weiteren beschreibt die US 2003/0052568 A1 einen Läufer für eine elektrische Maschine gemäß dem Oberbegriff des Anspruchs 1. Insbesondere offenbart dieses Dokument eine elektrische Maschine mit einem Läufer, wobei die Wicklung des Läufers aus einem supraleitenden Material gefertigt ist. Auch hier ist zur Schirmung der supraleitenden Wicklungen eine Hülle vorgesehen, die entweder aus Kupfer oder Aluminium gefertigt ist.

Aus der US 3,194,655 A ist eine Kupfer-Chrom-Zirkonium-Legierung bekannt, die eine relativ hohe Materialfestigkeit aufweist. Die Legierung besteht aus 0,6 bis 0,9 Gewichtsprozent Chrom, 0,4 bis 0,6 Gewichtsprozent Zirkonium und im Übrigen aus Kupfer.

In der US 4,224,066 A ist eine Kupferlegierung beschrieben, die eine hohe mechanische Festigkeit und gleichzeitig eine hohe elektrische Leitfähigkeit aufweist. Diese Legierung besteht aus 0,05 bis 1,25 Gewichtsprozent Chrom, 0,05 bis 1,0 Gewichtsprozent Zirkonium, 0,01 bis 0,15 Gewichtsprozent Eisen und im Übrigen aus Kupfer.

Die Aufgabe der vorliegenden Erfindung besteht darin, einen Läufer der eingangs genannten Art derart auszugestalten, dass die Hülle zumindest in ihrem den Wicklungsträger und die Wicklung radial umgebenden Bereich fertigungstechnisch einfacher herzustellen ist.

Die Aufgabe wird durch einen Läufer mit den Merkmalen des Anspruchs 1 gelöst. Erfindungsgemäß besteht die Hülle zumindest in dem Bereich, in dem sie den Wicklungsträger und die supraleitende Läuferwicklung radial umschließt, (Mantelfläche der Hülle) einheitlich aus einer Kupferlegierung bei welcher dem Kupfer geringe Mengen an Chrom (bis zu 2 Gewichtsprozent) und Zirkonium (0,1 bis 0,3 Gewichtsprozent) beigemischt sind. Die Kupferlegierung ist verfestigt, wobei die verfestigte Kupferlegierung eine oxid-dispersions-gehärtete Kupferlegierung ist.

Die Aufgabe wird weiterhin durch eine elektrische Maschine, insbesondere eine Synchronmaschine gelöst, bei welcher der Läufer entsprechend der oben genannten Ausgestaltung ausgebildet ist.

Besonders gute Ergebnisse haben sich ergeben, wenn der Chromanteil mindestens 0,5 Gewichtsprozent beträgt. Ein Optimum liegt im Bereich von 0,8 Gewichtsprozent bis 1,2 Gewichtsprozent für Chrom und 0,2 Gewichtsprozent bis 0,3 Gewichtsprozent für Zirkonium.

Zusätzlich zum Verwenden einer der oben genannten Kupferlegierungen ist es vorgesehen, dass die Kupferlegierung eine verfestigte Kupferlegierung ist, wobei die verfestigte Kupferlegierung eine oxid-dispersions-gehärtete Kupferlegierung ist. Als so verfestigte Kupferlegierung kommt hierbei insbesondere eine ausscheidungsgehärtete Kupferlegierung in Frage. Zusätzlich könnte die Kupferlegierung kaltverfestigt und/oder mischkristallverfestigt sein.

Auf Grund des Umstands, dass die Mantelfläche der Hülle einheitlich ausgebildet ist, ist es insbesondere möglich, dass die Mantelfläche als nahtloses Rohr ausgebildet ist. Es ist also keine axial verlaufende Schweißnaht vorhanden.

Weitere Vorteile und Einzelheiten ergeben sich aus der nachfolgenden Beschreibung von Ausführungsbeispielen in Verbindung mit den Zeichnungen. Es zeigen in Prinzipdarstellung:
- FIG 1: einen Schnitt durch eine elektrische Maschine,
- FIG 2: einen Schnitt durch eine Mantelfläche einer erfindungsgemäßen Hülle und
- FIG 3: einen Schnitt durch eine Mantelfläche einer Hülle des Standes der Technik.

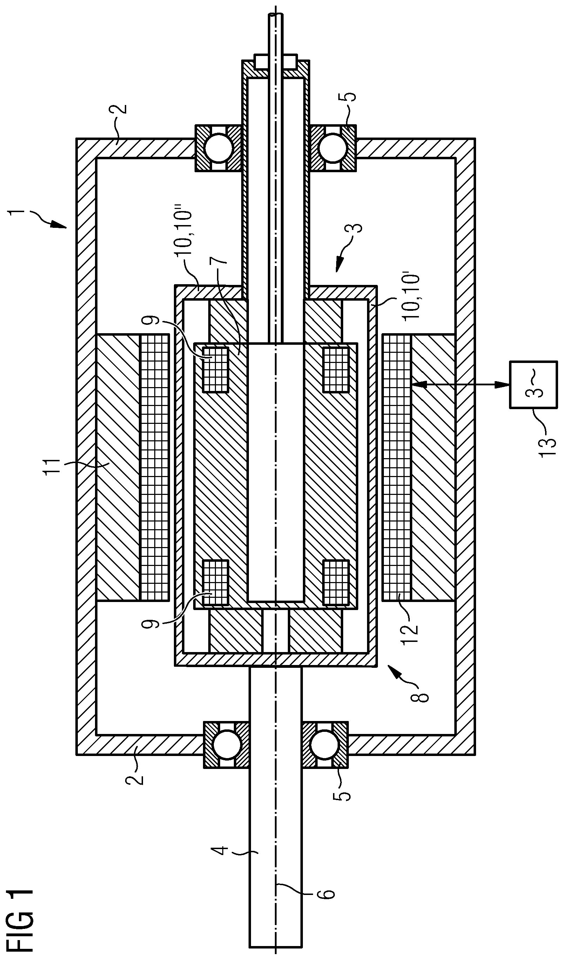

Gemäß FIG 1 weist eine elektrische Maschine 1 ein Maschinengehäuse 2 auf. Im Maschinengehäuse 2 ist ein Läufer 3 gelagert. Der Läufer 3 weist eine Läuferwelle 4 auf, die in Lagern 5 der elektrischen Maschine 1 gelagert ist. Die Lager 5 sind hierbei in der Regel als Wälzlager ausgebildet. Dargestellt sind in FIG 1 als spezielle Ausgestaltung von Wälzlagern Kugellager. Die Lager 5 könnten jedoch alternativ als andersartige Wälzlager ausgebildet sein, beispielsweise als Zylinderlager. Auch wäre es möglich, eine Gleitlagerung oder eine kontaktlose Lagerung (Magnetlager oder dergleichen) vorzusehen.

Die Läuferwelle 4 definiert eine Läuferachse 6. Um die Läuferachse 6 ist der Läufer 3 drehbar.

Soweit nachfolgend die Begriffe "axial", "radial" und "tangential" benutzt werden, sind sie stets auf die Läuferachse 6 bezogen. Der Begriff "axial" bedeutet hierbei eine Richtung parallel zur Läuferachse 6. Die Richtungen "radial" und "tangential" verlaufen in einer zur Läuferachse 6 orthogonalen Ebene. "Radial" bezeichnet hierbei eine Richtung auf die Läuferachse 6 zu bzw. von der Läuferachse 6 weg. "Tangential" ist eine Richtung um die Läuferachse 6 herum.

Der Läufer 3 weist einen Wicklungsträger 7 auf. Der Wicklungsträger 7 ist drehfest auf der Läuferwelle 4 angeordnet. Der Wicklungsträger 7 umgibt die Läuferwelle 4 in einem Mittelabschnitt 8. Der Wicklungsträger 7 läuft also in einem radialen Abstand tangential um die Läuferwelle 4 um.

Der Wicklungsträger 7 trägt eine Läuferwicklung 9. Die Läuferwicklung 9 ist hierbei supraleitend.

Der Läufer 3 weist weiterhin eine Hülle 10 auf. Die Hülle 10 umschließt gemäß FIG 1 den Wicklungsträger 7 und die supraleitende Läuferwicklung 9 sowohl radial als auch axial. Ein Bereich 10', in dem die Hülle 10 den Wicklungsträger 7 und die supraleitende Läuferwicklung 9 radial umschließt, wird nachfolgend als Mantelfläche 10' der Hülle 10 bezeichnet. Bereiche 10", in denen die Hülle 10 den Wicklungsträger 7 und die Läuferwicklung 9 axial umschließt, werden nachfolgend als Stirnflächen 10" der Hülle 10 bezeichnet.

Gemäß der Ausgestaltung von FIG 1 sind sowohl die Mantelfläche 10' als auch die Stirnflächen 10" vorhanden. Es sind jedoch auch andere Ausgestaltungen möglich. Zumindest die Mantelfläche 10' ist jedoch stets vorhanden.

Im Maschinengehäuse 2 ist drehfest ein Stator 11 angeordnet. Der Stator 11 umgibt den Läufer 3 radial. Der Stator 11 trägt eine Ständerwicklung 12. Die Ständerwicklung 12 ist an eine Spannungsversorgung 13 anschließbar. Die Spannungsversorgung 13 ist entsprechend der Darstellung von FIG 1 in der Regel als dreiphasige Wechselspannungsversorgung ausgebildet. Hiermit korrespondierend ist die elektrische Maschine 1 daher in der Regel eine dreiphasige Drehstrommaschine. Beispielsweise kann die elektrische Maschine als Synchronmaschine ausgebildet sein.

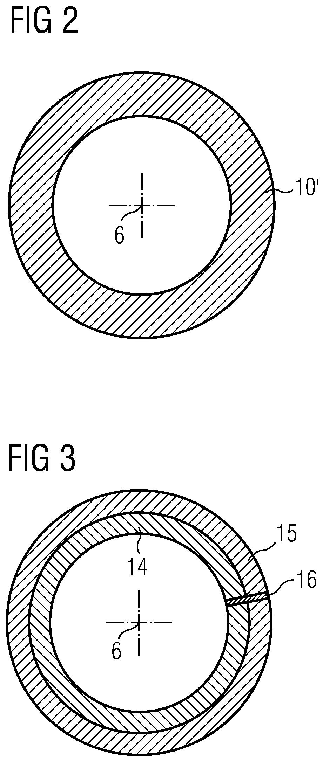

Die Mantelfläche 10' ist gemäß FIG 1 radial zwischen dem Stator 11 einerseits und dem Wicklungsträger 7 und der Läuferwicklung 9 andererseits angeordnet. Insbesondere die Mantelfläche 10' muss einerseits mechanisch stabil sein und andererseits eine hohe elektrische Leitfähigkeit aufweisen. Erfindungsgemäß besteht die Mantelfläche 10' - siehe auch FIG 2 - einheitlich aus einer Metalllegierung. Diese Ausgestaltung steht im Gegensatz zum Stand der Technik, bei dem - siehe FIG 3 - die Mantelfläche 10' mindestens zweischichtig ausgebildet ist, beispielsweise gemäß der Lehre der DE 103 00 269 A1 eine innere Schicht 14 aus Stahl und eine äußere Schicht 15 aus Kupfer aufweist. Auf Grund der einheitlichen Ausgestaltung der Mantelfläche 10' kann weiterhin die Mantelfläche 10' gemäß FIG 2 insbesondere als nahtloses Rohr ausgebildet sein (siehe FIG 2). Auch diese Ausgestaltung steht im Gegensatz zum Stand der Technik, bei dem in der Regel eine Schweißnaht 16 vorhanden ist.

Die Metalllegierung, aus der die Mantelfläche 10' besteht (und aus der vorzugsweise auch die Stirnflächen 10" bestehen), ist derart gewählt, dass sie folgende Materialeigenschaften aufweist:
- Sie ist unmagnetisch, d. h. sie ist diamagnetisch oder paramagnetisch, nicht jedoch ferromagnetisch.
- Sie weist (bei 20 °C) eine elektrische Leitfähigkeit auf, die mindestens 60 % der elektrischen Leitfähigkeit von Kupfer (ebenfalls bei 20 °C) beträgt. Vorzuziehen ist hierbei, dass die elektrische Leitfähigkeit 70 bis 90% der Leitfähigkeit von Kupfer beträgt. Es handelt sich bei der Metalllegierung um eine Kupferlegierung.
- Die Metalllegierung weist (bei 200 °C) eine mechanische Zugfestigkeit auf, die mindestens 250 N/mm² beträgt. Vorzugsweise beträgt die mechanische Zugfestigkeit sogar mindestens 280 N/mm².
- Die Metalllegierung weist (ebenfalls bei 200 °C) eine 0,2 %-Dehngrenze von mindestens 200 N/mm² auf. Vorzugsweise weist die Metalllegierung sogar eine 0,2 %-Dehngrenze von mindestens 220 N/mm² auf.

Um die mechanische Festigkeit (also die erforderliche Zugfestigkeit und die notwendige Dehngrenze) zu erreichen, muss die Metalllegierung geeignet gewählt sein. Dabei werden Kupferlegierungen eingesetzt, bei denen dem Kupfer Chrom und Zirkonium beigemischt sind. Die Kupferlegierung enthält hierbei bis zu 2,0 Gewichtsprozent Chrom und bis zu 0,3 Gewichtsprozent Zirkonium. Die Untergrenzen sind 0,0 Gewichtsprozent für Chrom und 0,1 Gewichtsprozent für Zirkonium.

Weiterhin ist die Metalllegierung eine verfestigte, oxid-dispersions-gehärtete Kupferlegierung, gegebenenfalls in Kombination mit einer Ausscheidungshärtung. Zusätzlich dazu kommt eine Kaltverfestigung und eine Mischkristallverfestigung in Frage.

Wenn die Kupferlegierung Chrom enthält, enthält sie vorzugsweise mindestens 0,5 Gewichtsprozent Chrom, insbesondere zwischen 0,8 Gewichtsprozent und 1,2 % Gewichtsprozent. An Zirkonium enthält sie vorzugsweise zwischen 0,2 Gewichtsprozent und 0,3 Gewichtsprozent. Besonders bevorzugt ist, dass die Kupferlegierung sowohl Chrom als auch Zirkonium enthält, und zwar in den oben genannten bevorzugten Mengen. Mit derartigen Kupferlegierungen können bei Temperaturen bis weit über 200 °C eine mechanische Zugfestigkeit von mindestens 300 N/mm² und eine 0,2 % Dehngrenze von mindestens 230 N/mm² erreicht werden. Die elektrische Leitfähigkeit dieser Legierung erreicht bis zu 85 % der elektrischen Leitfähigkeit von Kupfer.

Die obige Beschreibung dient ausschließlich der Erläuterung der vorliegenden Erfindung. Der Schutzumfang der vorliegenden Erfindung ist ausschließlich durch die beigefügten Ansprüche bestimmt.

## Patentansprüche

1. Läufer für eine elektrische Maschine (1), insbesondere eine Synchronmaschine (1),
- wobei der Läufer eine eine Läuferachse (6) definierende Läuferwelle (4) aufweist,
- wobei der Läufer einen Wicklungsträger (7) aufweist, der drehfest auf der Läuferwelle (4) angeordnet ist, so dass er die Läuferwelle (4), bezogen auf die Läuferachse (6), in einem Mittelabschnitt (8) umgibt,
- wobei der Wicklungsträger (7) eine supraleitende Läuferwicklung (9) trägt,
- wobei der Läufer eine Hülle (10) aufweist, die, bezogen auf die Läuferachse (6), den Wicklungsträger (7) und die Läuferwicklung (9) zumindest radial umschließt,
**dadurch gekennzeichnet, dass**
- die Hülle (10) zumindest in dem Bereich (10'), in dem sie den Wicklungsträger (7) und die supraleitende Läuferwicklung (9) radial umschließt, einheitlich aus einer Kupferlegierung besteht, die maximal 2,0 Gewichtsprozent Chrom, mindestens 0,1 und maximal 0,5 Gewichtsprozent Zirkonium und im Übrigen Kupfer enthält und verfestigt ist,
- wobei die verfestigte Kupferlegierung eine oxid-dispersions-gehärtete Kupferlegierung ist.

2. Läufer nach Anspruch 1,
**dadurch gekennzeichnet,**
**dass** die Kupferlegierung mindestens 0,5 Gewichtsprozent Chrom enthält.

3. Läufer nach Anspruch 1 oder 2,
**dadurch gekennzeichnet,**
**dass** die verfestigte Kupferlegierung eine ausscheidungsgehärtete Kupferlegierung ist.

4. Läufer nach einem der obigen Ansprüche,
**dadurch gekennzeichnet,**
**dass** die Mantelfläche (10') als nahtloses Rohr ausgebildet ist.

5. Elektrische Maschine, insbesondere Synchronmaschine,
- wobei die elektrische Maschine ein Maschinengehäuse (2) aufweist,
- wobei im Maschinengehäuse (2) ein Läufer (3) gemäß einem der obigen Ansprüche drehbar gelagert ist,
- wobei im Maschinengehäuse (2) drehfest ein Stator (11) angeordnet ist, der, bezogen auf die Läuferachse (6), den Läufer (3) radial umgibt,
- wobei der Stator (11) eine Ständerwicklung (12) trägt, die an eine Spannungsversorgung (13) anschließbar ist.

## Claims

1. Rotor for an electrical machine (1), in particular a synchronous machine (1),
- wherein the rotor has a rotor shaft (4) defining a rotor axis (6),
- wherein the rotor has a winding support (7), which is arranged fixed against rotation on the rotor shaft (4), with the result that it surrounds the rotor shaft (4) in a central section (8), in relation to the rotor axis (6),
- wherein the winding support (7) supports a superconducting rotor winding (9),
- wherein the rotor has a sleeve (10), which surrounds the winding support (7) and the rotor winding (9) at least radially, in relation to the rotor axis (6),
**characterized in that**
- the sleeve (10) consists integrally of a copper alloy which contains a maximum of 2.0 percent by weight of chromium, at least 0.1 and at most 0.5 percent by weight of zirconium and the remainder copper, at least in the region (10') in which it surrounds the winding support (7) and the superconducting rotor winding (9) radially, and is solidified,
- wherein the solidified copper alloy is an oxide dispersion-hardened copper alloy.

2. Rotor according to Claim 1,
**characterized in that** the copper alloy contains at least 0.5 percent by weight of chromium.

3. Rotor according to Claim 1 or 2,
**characterized in that** the solidified copper alloy is a precipitation-hardened copper alloy.

4. Rotor according to one of the above claims,
**characterized in that** the lateral surface (10') is in the form of a seamless tube.

5. Electrical machine, in particular synchronous machine,
- wherein the electrical machine has a machine housing (2),
- wherein a rotor (3) according to one of the above claims is mounted rotatably in the machine housing (2),
- wherein a stator (11), which surrounds the rotor (3) radially, in relation to the rotor axis (6), is arranged fixed against rotation in the machine housing (2),
- wherein the stator (11) supports a stator winding (12), which can be connected to a voltage supply (13).

## Revendications

1. Rotor d'une machine (1) électrique, notamment d'une machine (1) synchrone,
- dans lequel le rotor a un arbre (4) de rotor définissant un axe (6) du rotor,
- dans lequel le rotor a un support (7) d'enroulement solidaire de l'arbre (4) du rotor, de manière à entourer l'arbre (4) du rotor, rapporté à l'axe (6) du rotor, dans une partie (8) médiane,
- dans lequel le support (7) d'enroulement porte un enroulement (9) de rotor supraconducteur,
- dans lequel le rotor a un manchon (10), qui, rapporté à l'axe (6) du rotor, entoure au moins radialement le support (7) d'enroulement et l'enroulement (9) du rotor,
**caractérisé en ce que**
- le manchon (10) est, au moins dans la partie (10'), dans laquelle il entoure radialement le support (7) d'enroulement et l'enroulement (9) de rotor supraconducteur, uniformément en un alliage de cuivre, qui contient au maximum 2,0 pour cent en poids de chrome, au moins 0,1 et au maximum 0,5 pour cent en poids de zirconium et le reste étant du cuivre et est durci,
- dans lequel l'alliage de cuivre durci est un alliage de cuivre durci par dispersion à l'oxyde.

2. Rotor suivant la revendication 1,
**caractérisé**
**en ce que** l'alliage de cuivre contient au moins 0,5 pour cent en poids de chrome.

3. Rotor suivant la revendication 1 ou 2,
**caractérisé**
**en ce que** l'alliage de cuivre durci est un alliage de cuivre durci par précipitation.

4. Rotor suivant l'une des revendications précédentes,
**caractérisé**
**en ce que** la surface (10') latérale est constituée sous la forme d'un tube sans couture.

5. Machine électrique, notamment machine synchrone,
- dans laquelle la machine électrique a une carcasse (2) de machine,
- dans laquelle, dans la carcasse (2) de machine est monté tournant un rotor (3) suivant l'une des revendications précédentes,
- dans laquelle un stator (11), qui, rapporté à l'axe (6) du rotor, entoure radialement le rotor (3), est monté fixe en rotation dans la carcasse (2) de la machine,
- dans laquelle le stator (11) porte un enroulement (12) de stator, qui peut être connecté à une alimentation (13) en tension.
